# EUROPÄISCHE PATENTSCHRIFT

(11) **EP 2 705 970 B1**
(45) Veröffentlichungstag und Bekanntmachung des Hinweises auf die Patenterteilung: **29.04.2020**
(21) Anmeldenummer: 13177349.1
(22) Anmeldetag: 22.07.2013
(51) Int. Cl.: B60L 3/04, B60L 3/00, B60L 53/14, B60L 53/65, B60L 50/60

(54) **Sicherheitssystem für Fahrzeuge zur Reduzierung einer Gefährdung durch einen elektrischen Schlag von einer Batterie**
Safety system for a vehicle for reducing the risk of an electrical shock from a battery
Système de sécurité pour véhicules pour la réduction d'un risque de choc électrique provenant d'une batterie

(30) Priorität: 09.08.2012 DE 102012214114
(43) Veröffentlichungstag der Anmeldung: 12.03.2014
(73) Patentinhaber: Robert Bosch GmbH, 70442 Stuttgart (DE); Samsung SDI Co., Ltd., Yongin-si Gyeonggi-do 446-577 (KR)
(72) Erfinder: Gless, Michael, 70437 Stuttgart-Zazenhausen (DE)
(74) Vertreter: Bee, Joachim

(56) Entgegenhaltungen:
- EP-A2- 1 153 787
- JP-A- 2010 165 596
- JP-A- 2011 217 544
- US-A1- 2008 185 991
- US-A1- 2010 238 006

## Beschreibung

Die vorliegende Erfindung betrifft ein Sicherheitssystem für Fahrzeuge zur Reduzierung einer Gefährdung durch einen elektrischen Schlag von einer Batterie. Das Sicherheitssystem weist an der Außenseite des Fahrzeuges eine bedienbare Fläche und einen Ladesteckplatz mit einem Betriebsstecker auf. Der Betriebsstecker und der Ladesteckplatz sind dabei außerhalb des Fahrzeuges miteinander kombiniert und derart ausgebildet, dass ein Entfernen des Betriebssteckers eine Spannungsfreischaltung des Fahrzeuges bewirkt.

Ferner betrifft die Erfindung ein Kraftfahrzeug, das eine solche Batterie enthält und ein Verfahren zur Reduzierung einer Gefährdung durch einen elektrischen Schlag von einer Batterie, welches zum Ausführen der erfindungsgemäßen Erfindung dient.

### Stand der Technik

Es zeichnet sich ab, dass in Zukunft sowohl bei stationären Anwendungen, wie Windkraftanlagen, in Kraftfahrzeugen, die als Hybrid- oder Elektrokraftfahrzeuge ausgelegt sind, als auch bei Elektronikgeräten, wie Laptops oder Mobiltelefonen, neue Batteriesysteme zum Einsatz kommen werden, an die sehr hohe Anforderungen bezüglich Zuverlässigkeit, Sicherheit, Leistungsfähigkeit und Lebensdauer gestellt werden.

Der Lithium-Ionen-Batterie wird eine Schlüsselrolle für die Elektrifizierung des Antriebssystems zugesprochen. Wie bei den meisten anderen elektrischen Energiespeichern ist auch bei Lithium-Ionen-Batterien die Leistungsfähigkeit und Haltbarkeit von der Temperatur abhängig. Bei tiefen Temperaturen sind die Ladefähigkeit und die Entnahme von Energie begrenzt, wohingegen bei hohen Temperaturen der Energiespeicher schneller altert. Auch bei zukünftigen Batterietechnologien wird es voraussichtlich eine gewisse Abhängigkeit von der Temperatur geben.

Derartige Lithium-Ionen-Zellen umfassen üblicherweise eine Elektrode, die Lithium-Ionen im Zuge der sogenannten Interkalation reversibel einlagern kann oder im Zuge der sogenannten Deinterkalation wieder auslagern kann. Die Interkalation erfolgt beim Ladeprozess der Batteriezelle, und die Deinterkalation erfolgt bei der Entladung der Batteriezelle zur Stromversorgung von elektrischen Aggregaten.

Aufgrund der relativ hohen Energiedichte werden Lithium-Ionen-Batterien vielfältig eingesetzt. Prädestiniert für ein breites Einsatzgebiet von Applikationen ist die Lithium-Ionen-Technologie. Sie zeichnet sich unter anderem durch hohe Energiedichte und eine äußerst geringe Selbstentladung aus.

Hohe Antriebsleistungen von elektrischen Fahrzeugantrieben erfordern hohe elektrische Spannungen beziehungsweise Ströme von Speicher und Elektromaschinen. Die Sicherheit der Fahrzeuginsassen und insbesondere der Rettungskräfte muss in jeder Situation, beispielsweise auch im Fehlerfall durch eine Beschädigung der Kabel oder eine Verringerung der Abstände zu spannungsführenden Teile, sichergestellt werden.

Das nach dem Stand der Technik und Vorschriften eingesetzte "service device" ist allein nicht ausreichend, um die Sicherheit der Fahrzeuginsassen zu gewährleisten. Das "service device" ist für die Wartung vorgesehen und verdeckt am Fahrzeug angebracht, so dass meist erst nach Berührung des Fahrzeuges das "service device" betätigt werden kann.

Das "service device" selbst ist oft nur schwer zugänglich, da es am Batteriegehäuse selbst montiert ist. Das Batteriegehäuse wird auf Grund der Fahrdynamik und Fahrstabilität (zum Beispiel die Kippneigung beim Elchtest) mit tiefem Schwerpunkt (zum Beispiel der Fahrzeugunterboden) montiert.

Die DE 10 2009 057 007 B4 offenbart ein Fahrzeug, insbesondere ein Hybrid- und/oder Elektrofahrzeug, mit einem bedienbaren Hauptschalter für eine Spannungsversorgung und eine Sicherung, die den Hauptschalter gegen unautorisierte Bedienung sichert. Die Bedienung erfolgt außerhalb des Fahrzeuges. Darüber hinaus weist das Fahrzeug eine Sicherungsfreischaltung auf, die die Sicherung frei und/oder ausschaltet und damit eine Bedienung des Hauptschalters autorisiert, wenn ein Unfall und/oder ein Servicefall erkannt wird. Die US2008185991 A1 offenbart ein Elektrofahrzeug mit einem Sicherheitssystem zur Reduzierung einer Gefährdung durch einen elektrischen Schlag von einer Batterie nach der Präambel des unabhängigen Patentanspruchs 1.

### Offenbarung der Erfindung

Ein oder mehrere Probleme des Standes der Technik werden in der vorliegenden Erfindung durch ein Sicherheitssystem, welches die Merkmale des unabhängigen Patentanspruchs 1 aufweist, sowie mit einem Verfahren mit den Merkmalen des unabhängigen Patentanspruchs 8 gelöst. Erfindungsgemäß wird ein Sicherheitssystem für Fahrzeuge mit einem Hochvolt- und Niedervoltstromkreis zur Reduzierung einer Gefährdung durch einen elektrischen Schlag von einer Batterie zur Verfügung gestellt, wobei das Sicherheitssystem an der Außenseite des Kraftfahrzeuges angeordnet ist und eine bedienbare Fläche und einen Ladesteckplatz mit einem Betriebsstecker aufweist, wobei die Batterie mit einem Antriebssystem des Kraftfahrzeuges verbunden ist.

Kennzeichnend ist, dass der Betriebsstecker und der Ladesteckplatz außerhalb des Kraftfahrzeuges miteinander kombiniert sind und derart ausgebildet sind, dass ein Entfernen des Betriebssteckers eine Spannungsfreischaltung des Kraftfahrzeuges bewirkt, indem ein Schütz geöffnet wird, womit der Hochvolt- und Niedervoltstromkreis mechanisch getrennt und somit elektrisch unterbrochen wird und hierbei die Batterie vom Kraftfahrzeug sicher getrennt wird ohne dass leitfähige Fahrzeugbauteile berührt werden. Die bedienbare Fläche ist dabei aus elektrisch nicht leitendem Material ausgeführt, wobei die bedienbare Fläche eine visuelle Anzeige ist, die Informationen für die Bediener und/ oder zum Schutz vor Missbrauch oder Diebstahl gibt. Zwischen der bedienbaren Fläche und dem Betriebsstecker eine mechanische Verbindung besteht. Der Betriebsstecker ist durch Öffnen der bedienbaren Fläche betätigbar und das Sicherheitssystem ist mittels eines Werkzeugs oder durch Eingabe eines Schlüssels oder eines Passwortes in der bedienbaren Fläche gegen beabsichtigtes oder unbeabsichtigtes Wiedereinschalten sicherbar.

In einer vorteilhaften Ausgestaltung der Erfindung handelt es sich bei der Batterie um eine Lithium-Ionen-Batterie. Durch die Verwendung der Lithium-Ionen-Technologie können besonders hohe Energiespeicherdichten erzielt werden, was besonders im Bereich der Elektromobilität zu weiteren Vorteilen führt.

Der Erfindung liegt die Erkenntnis zugrunde, dass in der vorliegenden Erfindung der Betriebsstecker und der Ladesteckplatz außerhalb des Fahrzeuges miteinander kombiniert sind und durch das Entfernen des Betriebssteckers eine Spannungsfreischaltung des Fahrzeuges bewirkt wird. Dadurch, dass der Betriebsstecker und der Ladesteckplatz miteinander kombiniert sind, kann die Batterie ohne eine Berührung des Fahrzeuges vom Fahrzeug sicher getrennt werden. Mit anderen Worten, durch die Kombination des Betriebssteckers und des Ladesteckplatzes wird die Trennung einer Batterie vom Fahrzeug optimiert und so eine sichere Trennung der Batterie gewährleistet.

Zum Einen besteht erfindungsgemäß eine mechanische Verbindung zwischen der bedienbaren Fläche und dem Betriebsstecker. Der Betriebsstecker wird durch Öffnen der bedienbaren Fläche betätigt. Zum Anderen ist die bedienbare Fläche beziehungsweise der Betriebsstecker gegen Wiedereinschalten sicherbar. Denn ein beabsichtigtes und unbeabsichtigtes Wiedereinschalten des Sicherheitssystems soll durch Unbeteiligte, beispielsweise während einer Wartung, vermieden werden. Daher kann das Sicherheitssystem durch den Einsatz mit besonderem Werkzeug oder als Software-Lösung durch Eingabe eines Schlüssels oder Passwortes in der bedienbaren Fläche entfernt/aktiviert werden.

Ein Vorteil der vorliegenden Erfindung ist, dass durch die Kombination des Betriebssteckers und des Ladesteckplatzes eine Gefährdung durch einen elektrischen Schlag von einer Batterie reduziert wird. Zum anderen wird die Trennung der Batterie vom Fahrzeug vereinfacht. Ein weiterer Vorteil der vorliegenden Erfindung ist, dass dadurch nicht die Motorhaube oder der Kofferraum des Fahrzeuges geöffnet werden muss, um die Batterie vom Fahrzeug sicher zu trennen, sondern lediglich eine Art Tankklappe, die vorzugsweise aus elektrisch nichtleitendem Material besteht.

Zudem ist vorteilhaft, dass Ersthelfer keine Hochvolt-Handschuhe tragen müssen, um die Batterie vom Fahrzeug zu trennen. Anderer Vorteil ist, dass durch die Kombination vom Betriebsstecker und Ladesteckplatz eine Normung/Regelung einer einheitlichen Position an verschiedenen Fahrzeugen leichter möglich ist. Beispielsweise kann das Sicherheitssystem auf der rechten Seite eines Fahrzeuges in ergonomischer Höhe angebracht werden. Der Vorteil ist, dass eine einheitliche von außen gut erkennbare Stelle bestimmt wird, die beispielsweise dem Rettungspersonal bekannt ist, anstelle einer individuellen Position an verschiedenen Fahrzeugen. Dadurch kann das Rettungs- oder Einsatzpersonal leicht den Interlock öffnen, ohne leitfähige Fahrzeugbauteile berühren zu müssen. Das Sicherheitssystem kann zusätzlich gegen Wiedereinschalten gesichert werden.

Weiterer Vorteil ist, dass auch am Ende der Batterie-Lebensdauer, vor dem Recycling eines Fahrzeuges, eine Entladung der Batterie aktiviert werden kann, was eine Gefährdung durch elektrischen Schlag von der Batterie reduziert. Es wird zudem vorteilhaft ein optimiertes Sicherheitssystem zur Verfügung gestellt, das keine Mehrkosten für zusätzliche Sicherheit benötigt. Anderer Vorteil ist, dass zusätzliche Funktionen, wie beispielsweise Schutz gegen Missbrauch oder Wegfahrsperre, integrierbar sind. Zudem kann das Sicherheitssystem mit einer Abdeckung verdeckt oder offen in einem Fahrzeug integrierten Design ausgeführt werden. Weiterhin wird vorteilhaft die Komplexität reduziert.

Erfindungsgemäß ist die bedienbare Fläche aus elektrisch nichtleitendem Material ausgeführt. Dadurch wird eine mögliche Gefährdung durch einen elektrischen Schlag von einer Batterie verhindert, und so die Sicherheit erhöht.

Erfindungsgemäß ist vorgesehen, dass die bedienbare Fläche eine visuelle Anzeige ist. Durch die visuelle Anzeige werden vorteilhaft Gefahrenpotenziale angezeigt und Handlungsanweisungen an Rettungskräfte gegeben.

Gemäß einer weiteren bevorzugten Ausführungsform der Erfindung ist vorgesehen, dass die bedienbare Fläche mit einer optischen Kontrolle ausgeführt ist. Dadurch wird vorteilhaft erkannt, ob eine Gefahr besteht und ob eine Spannungsfreischaltung stattgefunden hat.

In einer besonderen Ausführungsform der Erfindung ist weiterhin vorgesehen, dass die bedienbare Fläche spiegelsymmetrisch zum Ladesteckplatz angeordnet ist. Der Vorteil dabei ist, dass das Sicherheitssystem optimiert und vereinfacht wird.

Alternativ ist mit Vorteil vorgesehen, dass die bedienbare Fläche den Zustand des Systems anzeigt und Farb-, Blink- und/oder Tonsignale ausgibt. Dadurch werden vorteilhaft Gefahrenhinweise und Warnungen ausgegeben, damit Rettungskräfte im Notfall schnell handeln können. Zudem wird dadurch vorteilhaft die Sicherheit erhöht.

Nach einer weiteren vorteilhaften Ausgestaltung der Erfindung stehen der Betriebsstecker und die Batterie mit einer Verbindungseinheit in Verbindung. Der Vorteil dabei ist, dass die Möglichkeit eines elektrischen Schlags von einer Batterie dadurch reduziert und demnach auch die Sicherheit erhöht wird.

In einer weiteren vorteilhaften Ausführungsform der Erfindung ist vorgesehen, dass die Batterie über Signal- und/oder Versorgungsinterlock getrennt wird. Dadurch wird vorteilhaft ein definierter sicherer Zustand hergestellt.

Gemäß einer vorteilhaften Ausführungsform der Erfindung handelt es sich bei dem Näherungssensor um einen Ultraschallsensor oder um einen Radarsensor oder um einen optischen Sensor, insbesondere um eine Kamera.

Erfindungsgemäß wird zudem ein Kraftfahrzeug mit einer Batterie und einem Sicherheitssystem bereitgestellt, wobei die Batterie mit einem Antriebssystem des Kraftfahrzeuges verbunden ist.

Die vorliegende Erfindung bezieht sich auch auf ein Verfahren zur Reduzierung einer Gefährdung durch einen elektrischen Schlag von einer Batterie, mittels eines Sicherheitssystems, wobei das Sicherheitssystem eine von außerhalb des Fahrzeuges bedienbare Fläche, einen Ladesteckplatz und einen Betriebsstecker aufweist, umfassend den Schritt: Entfernen des Betriebssteckers aus dem Ladesteckplatz für die Spannungsfreischaltung, wobei durch das Entfernen des Betriebssteckers ein Schütz geöffnet wird, womit der Hochvolt- und Niedrigvoltstromkreis mechanisch getrennt und somit elektrisch unterbrochen werden, so dass die Batterie vom Kraftfahrzeug im Falle eines Unfalls und/oder einer Systemstörung sicher getrennt wird.

Vorteilhafte Weiterbildungen der Erfindung sind in den Unteransprüchen angegeben und in der Beschreibung beschrieben.

### Zeichnungen

Ausführungsbeispiel der Erfindung wird anhand der Zeichnungen und der nachfolgenden Beschreibung näher erläutert. Es zeigen:
Figur 1 eine schematische Darstellung des erfindungsgemäßen Sicherheitssystems,
Figur 2 eine schematische Darstellung des erfindungsgemäßen Sicherheitssystems mit einer visuellen Anzeige und eine Kombination aus Betriebsstecker und Ladesteckplatz.
Figur 3 eine beispielhafte schematische Darstellung feines Sicherheitssystems mit einem am Fahrzeug angebrachten Näherungssensor.

### Ausführungsform der Erfindung

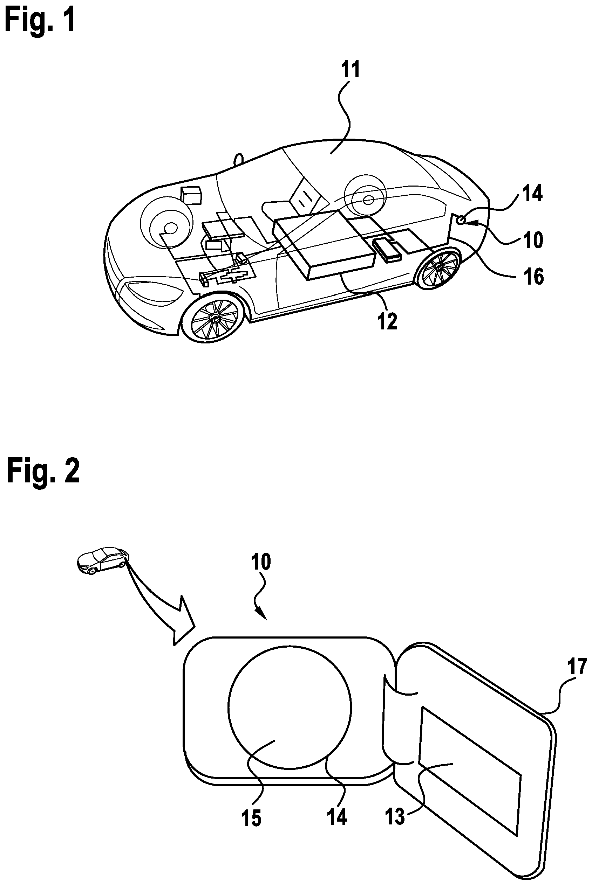

Figur 1 zeigt eine schematische Darstellung des erfindungsgemäßen Sicherheitssystems 10 zur Reduzierung einer Gefährdung durch einen elektrischen Schlag von einer Batterie 12. Die Figur 1 zeigt das Innenleben eines Fahrzeuges 11. Die Batterie 12 ist dabei am Unterboden des Fahrzeuges 11 montiert. Das Sicherheitssystem 10 ist an einer leicht zugänglichen Stelle angebracht.

Dieser einheitliche, ergonomisch gut zugängliche, gewohnte Platz dient neben dem Laden des Fahrzeuges 11 auch zum Öffnen des Interlocks, ohne leitfähige Fahrzeugbauteile berühren zu müssen. Der Betriebsstecker 15 und die Batterie 12 stehen mit einer Verbindungseinheit 16 in Verbindung. Dadurch wird die Gefährdung eines elektrischen Schlags von einer Batterie reduziert und zudem die Sicherheit erhöht.

Die Figur 2 zeigt eine schematische Darstellung des erfindungsgemäßen Sicherheitssystems 10 mit einer visuellen Anzeige und eine Kombination aus dem Betriebsstecker 15 und dem Ladesteckplatz 14. Figur 2 zeigt eine Klappe 17, die eine bedienbare Fläche 13 aufweist. Diese bedienbare Fläche 13 ist eine visuelle Anzeige, in der Informationen an die Bediener (Rettungskräfte oder Einsatzpersonal), wie beispielsweise Anweisungen für die Bedienung des Sicherheitssystems 10 gegeben werden oder es werden Farb-, Blink- und/oder Tonsignale ausgegeben, um beispielsweise das Fahrzeug 11 gegen Missbrauch oder Diebstahl zu schützen. Dabei besteht die visuelle Anzeige aus elektrisch nichtleitendem Material. Dadurch wird ein elektrischer Schlag von der Batterie 12 vermieden und die Sicherheit erhöht.

In Figur 2 ist weiterhin ein Ladesteckplatz 14 und ein Betriebsstecker 15 für die Spannungsfreischaltung der Batterie 12 zu sehen, die miteinander kombiniert sind. Das bedeutet, dass mit einem Steckplatz das Fahrzeug 11 sowohl elektrisch geladen werden kann als auch mit einem Betriebsstecker 15 eine Spannungsfreischaltung der Batterie gewährleistet wird. Das Sicherheitssystem 10 zeigt den Zustand des Systems an und gibt bei Bedarf Hinweise und Signale an Servicepersonal, Ersthelfer oder Rettungskräfte und ermöglicht so eine sichere Spannungsfreischaltung des Fahrzeuges. Wird der Betriebsstecker 15 betätigt/entfernt, so wird das Fahrzeug 11 von Spannungen freigeschalten.

Erfindungsgemäß ist das Sicherheitssystem 10 gegen ungewolltes Einschalten gesichert, beispielsweise indem der Betriebsstecker 15 vergleichbar einem Tankdeckel am Einfüllstutzen entfernt werden kann. Zudem bietet die bedienbare Fläche 13 Raum für Informationen und Bestätigungen an die Bediener, beispielsweise durch ein Display, das Anweisungen, Farb-, Blink- und/oder Tonsignale ausgibt, um gegebenenfalls vor Missbrauch zu schützen. Das bedeutet, dass durch das Entfernen des Betriebssteckers 15 ein sicherer Zustand hergestellt wird, da dadurch der Niedrigvoltkreis und der Hochvoltkreis unterbrochen werden. Ungewollte Potenzialunterschiede oder auch unbestimmte Zustände werden damit erkannt und ein sicherer Zustand hergestellt. Zusätzlich kann die Batterie 12 über Signal- und/oder Versorgungsinterlock getrennt werden. Für extreme Ausnahmefälle oder das Recycling besteht die Möglichkeit einer Notentladung des Sicherheitssystems 10. Zum Laden der Batterie (12) werden bevorzugt erforderliche Steckkontakte verwendet, wie beispielsweise Pilotkontakte (Interlock-Signale), die ohnehin für das Laden des Fahrzeuges 11, für den Stromfluss oder Einsteckkontrolle erforderlich sind.

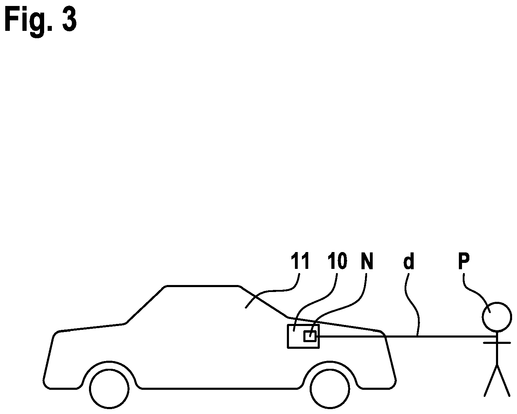

Figur 3 zeigt eine beispielhafte schematische Darstellung des Sicherheitssystems 10 mit einem am Fahrzeug 11 angebrachten Näherungssensor N.

Bei dem Näherungssensor N kann es sich um einen Ultraschallsensor oder um einen Radarsensor oder um einen optischen Sensor, insbesondere um eine Kamera handeln. Gemäß einer weiteren vorteilhaften Ausgestaltung der Erfindung kann es sich bei dem Näherungssensor N um einen bereits am Fahrzeug angebrachten Sensor, beispielsweise um einen Sensor der Einparkhilfe oder um einen Abstandssensor handeln.

Wird mittels des Näherungssensors N ein Objekt, beispielsweise ein sich dem Fahrzeug 11 sich nähernde Person P, erfasst, wird auf Grundlage des durch den Näherungssensor N erfassten Signals eine Spannungsfreischaltung des Fahrzeugs 11 bewirkt.

Vorzugsweise wird die Spannungsfreischaltung erst dann bewirkt, wenn die Person P einen Abstand d zum Fahrzeug 11 erreicht oder unterschreitet oder sich mit einer Geschwindigkeit dem Fahrzeug 11 nähert, wobei der Wert der Geschwindigkeit über einem bestimmten Schwellenwert liegt.

Zur Verarbeitung des mit dem Näherungssensor N erzeugten Signals wird eine nicht dargestellte Auswerteinheit verwendet.

Der Näherungssensor N kann vorzugswiese an der Außenfläche des Fahrzeugs 11, insbesondere an seinem Sicherheitssystem 10 angebracht sein. Gemäß einer weiteren vorteilhaften Ausführungsform der Erfindung kann der Näherungssensor in einer nicht dargestellten Stoßstange des Fahrzeugs 11 angebracht sein.

## Patentansprüche

1. Sicherheitssystem (10) für Kraftfahrzeuge (11) mit einem Hochvolt- und Niedervoltstromkreis zur Reduzierung einer Gefährdung durch einen elektrischen Schlag von einer Batterie (12), wobei das Sicherheitssystem (10) an der Außenseite des Kraftfahrzeuges (11) angeordnet ist und eine bedienbare Fläche (13) und einen Ladesteckplatz (14) mit einem Betriebsstecker (15) aufweist, wobei die Batterie (12) mit einem Antriebssystem des Kraftfahrzeuges (11) verbunden ist,
**dadurch gekennzeichnet, dass**
der Betriebsstecker (15) und der Ladesteckplatz (14) außerhalb des Kraftfahrzeuges (11) miteinander kombiniert sind und derart ausgebildet sind,
dass ein Entfernen des Betriebssteckers (15) eine Spannungsfreischaltung des Kraftfahrzeuges (11) bewirkt, indem ein Schütz geöffnet wird, womit der Hochvolt- und Niedervoltstromkreis mechanisch getrennt und somit elektrisch unterbrochen wird und hierbei die Batterie vom Kraftfahrzeug (11) sicher getrennt wird ohne dass leitfähige Fahrzeugbauteile berührt werden,
wobei die bedienbare Fläche (13) aus elektrisch nichtleitendem Material ausgeführt ist,
wobei die bedienbare Fläche (13) eine visuelle Anzeige ist, die Informationen für die Bediener und/oder zum Schutz vor Missbrauch oder Diebstahl gibt,
wobei eine mechanische Verbindung zwischen der bedienbaren Fläche (13) und dem Betriebsstecker (15) besteht,
wobei der Betriebsstecker (15) durch Öffnen der bedienbaren Fläche (13) entfernbar ist,
wobei das Sicherheitssystem (10) mittels eines Werkzeugs oder Eingabe eines Schlüssels oder Passwortes in der bedienbaren Fläche (13) gegen beabsichtigtes oder unbeabsichtigtes Wiedereinschalten sicherbar ist.

2. Sicherheitssystem (10) nach einem der vorhergehenden Ansprüche, wobei die bedienbare Fläche (13) mit einer optischen Kontrolle für die Erkennung einer Spannungsfreischaltung ausgeführt ist.

3. Sicherheitssystem (10) nach einem der vorhergehenden Ansprüche, wobei die bedienbare Fläche (13) spiegelsymmetrisch zum Ladesteckplatz (14) angeordnet ist.

4. Sicherheitssystem (10) nach einem der vorhergehenden Ansprüche, wobei die bedienbare Fläche (13) den Zustand des Systems anzeigt und Farb-, Blink- und/oder Tonsignale ausgibt.

5. Sicherheitssystem (10) nach einem der vorhergehenden Ansprüche, wobei der Betriebsstecker (15) und die Batterie (12) mit einer Verbindungseinheit (16) in Verbindung stehen.

6. Sicherheitssystem (10) nach einem der vorhergehenden Ansprüche, wobei die Batterie (12) über Signal- und/oder Versorgungsinterlock getrennt wird.

7. Kraftfahrzeug mit einer Batterie (12) und einem Sicherheitssystem (10) nach einem der Ansprüche 1 bis 6, wobei die Batterie (12) mit einem Antriebssystem des Kraftfahrzeuges verbunden ist.

8. Verfahren zur Reduzierung einer Gefährdung durch einen elektrischen Schlag von einer Batterie (12), mittels eines Sicherheitssystems (10) nach einem der Ansprüche 1 bis 6 **gekennzeichnet durch** das Umfassen des Schritts: Entfernen des Betriebssteckers (15) aus dem Ladesteckplatz (14) für die Spannungsfreischaltung, wobei durch das Entfernen des Betriebssteckers (15) ein Schütz geöffnet wird, womit der Hochvolt- und Niedrigvoltstromkreis mechanisch getrennt und somit elektrisch unterbrochen werden, so dass die Batterie (12) vom Fahrzeug (11) im Falle eines Unfalls und/oder einer Systemstörung sicher getrennt wird.

## Claims

1. Safety system (10) for motor vehicles (11) comprising a high-voltage and a low-voltage electrical circuit for reducing the danger due to an electric shock from a battery (12), wherein the safety system (10) is arranged on the outside of the motor vehicle (11) and has an operator control area (13) and a charging port (14) with an operating plug (15), wherein the battery (12) is connected to a drive system of the motor vehicle (11), **characterized in that** the operating plug (15) and the charging port (14) are combined with one another outside the motor vehicle (11) and are designed in such a way that removal of the operating plug (15) causes the voltage of the motor vehicle (11) to be disconnected by way of a contactor being opened, as a result of which the high-voltage and the low-voltage electrical circuit are mechanically disconnected and therefore electrically interrupted and in the process the battery is safely disconnected from the motor vehicle (11) without contact being made with conductive vehicle components, wherein the operator control area (13) is formed from an electrically non-conductive material, wherein the operator control area (13) is a visual display which provides information to the operator and/or for protecting against misuse or theft, wherein there is a mechanical connection between the operator control area (13) and the operating plug (15), wherein the operating plug (15) can be removed by opening the operator control area (13), wherein the safety system (10) can be secured against intentional or unintentional reconnection by means of a tool or input of a key or password into the operator control area (13).

2. Safety system (10) according to one of the preceding claims, wherein the operator control area (13) is embodied with visual monitoring for identifying disconnection of the voltage.

3. Safety system (10) according to either of the preceding claims, wherein the operator control area (13) is arranged with mirror-image symmetry with respect to the charging port (14).

4. Safety system (10) according to one of the preceding claims, wherein the operator control area (13) displays the state of the system and outputs colour signals, flashing signals and/or sound signals.

5. Safety system (10) according to one of the preceding claims, wherein the operating plug (15) and the battery (12) are connected to a connecting unit (16).

6. Safety system (10) according to one of the preceding claims, wherein the battery (12) is disconnected by means of signal interlock and/or supply interlock.

7. Motor vehicle comprising a battery (12) and a safety system (10) according to one of Claims 1 to 6, wherein the battery (12) is connected to a drive system of the motor vehicle.

8. Method for reducing the danger due to an electric shock from a battery (12) by means of a safety system (10) according to one of Claims 1 to 6, **characterized by** the inclusion of the step: removing the operating plug (15) from the charging port (14) for the purpose of disconnecting the voltage, wherein a contactor is opened by removing the operating plug (15), as a result of which the high-voltage and the low-voltage electrical circuit are mechanically disconnected and therefore electrically interrupted, so that the battery (12) is safely disconnected from the vehicle (11) in the event of an accident and/or a system disturbance.

## Revendications

1. Système de sécurité (10) pour véhicules automobiles (11) avec un circuit électrique haute tension et basse tension, pour la réduction d'une mise en danger par un choc électrique provenant d'une batterie (12), le système de sécurité (10) étant disposé sur la face extérieure du véhicule automobile (11) et présentant une surface de commande (13) et un emplacement de prise de charge (14) avec une prise d'alimentation (15), la batterie (12) étant reliée à un système d'entraînement du véhicule automobile (11),
**caractérisé en ce que** la prise d'alimentation (15) et l'emplacement de prise de charge (14) sont combinés en dehors du véhicule automobile (11) et sont réalisés de telle sorte qu'un retrait de la prise d'alimentation (15) provoque une mise hors tension du véhicule automobile (11) **en ce qu'**un contacteur-disjoncteur est ouvert par lequel le circuit électrique haute tension et basse tension est séparé mécaniquement et donc coupé électriquement, et la batterie est de ce fait séparée de façon sûre du véhicule automobile (11) sans occasionner un contact avec des composants conducteurs du véhicule,
dans lequel la surface de commande (13) est réalisée à partir d'un matériau diélectrique,
dans lequel la surface de commande (13) est un affichage visuel donnant des informations pour l'utilisateur et/ou servant à la protection contre les abus ou le vol,
dans lequel il existe un raccordement mécanique entre la surface de commande (13) et la prise d'alimentation (15),
dans lequel la prise d'alimentation (15) peut être retirée par l'ouverture de la surface de commande (13),
dans lequel le système de sécurité (10) peut être sécurisé contre une remise sous tension intentionnelle ou non intentionnelle au moyen d'un outil ou de la saisie d'une clé ou d'un mot de passe sur la surface de commande (13).

2. Système de sécurité (10) selon l'une quelconque des revendications précédentes, dans lequel la surface de commande (13) est réalisée avec un moyen de contrôle visuel pour détecter une mise hors tension.

3. Système de sécurité (10) selon l'une quelconque des revendications précédentes, dans lequel la surface de commande (13) est disposée de manière symétrique par rapport à l'emplacement de prise de charge (14).

4. Système de sécurité (10) selon l'une quelconque des revendications précédentes, dans lequel la surface de commande (13) affiche l'état du système et émet des signaux de couleur, clignotants et/ou sonores.

5. Système de sécurité (10) selon l'une quelconque des revendications précédentes, dans lequel la prise d'alimentation (15) et la batterie (12) sont connectées à une unité de connexion (16).

6. Système de sécurité (10) selon l'une quelconque des revendications précédentes, dans lequel la batterie (12) est séparée par un interverrouillage de signal et/ou d'alimentation.

7. Véhicule automobile avec une batterie (12) et un système de sécurité (10) selon l'une quelconque des revendications 1 à 6, dans lequel la batterie (12) est reliée à un système d'entraînement du véhicule automobile.

8. Procédé pour la réduction d'une mise en danger par un choc électrique provenant d'une batterie (12), au moyen d'un système de sécurité (10) selon l'une quelconque des revendications 1 à 6, **caractérisé en ce qu'**il comprend l'étape consistant à : retirer la prise d'alimentation (15) de l'emplacement de prise de charge (14) pour la mise hors tension, le retrait de la prise d'alimentation (15) ouvrant un contacteur-disjoncteur qui sépare mécaniquement le circuit électrique haute tension et basse tension et le coupe donc électriquement de sorte que la batterie (12) est séparée de façon sûre du véhicule (11) en cas d'accident et/ou de défaillance du système.
